# EUROPEAN PATENT SPECIFICATION

(11) **EP 1 164 272 B1**
(45) Date of publication and mention of the grant of the patent: **01.06.2005**
(21) Application number: 00305068.9
(22) Date of filing: 15.06.2000
(51) Int. Cl.: F02B 41/00, F02B 75/32, F02F 7/00

(54) **Internal combustion engine**
Brennkraftmaschine
Moteur à combustion interne

(43) Date of publication of application: 19.12.2001
(73) Proprietor: Meyer, Siegfried, 86756 Reimlimgen (DE)
(72) Inventor: Meyer, Siegfried, 86756 Reimlimgen (DE)
(74) Representative: Dossmann, Gérard

(56) References cited:
- EP-A- 0 245 189
- DE-A- 2 932 598
- DE-A- 3 444 233
- FR-A- 2 414 122

## Description

The present invention relates to an internal combustion engine, and particularly to an internal combustion engine which operates at an improved rotation efficiency.

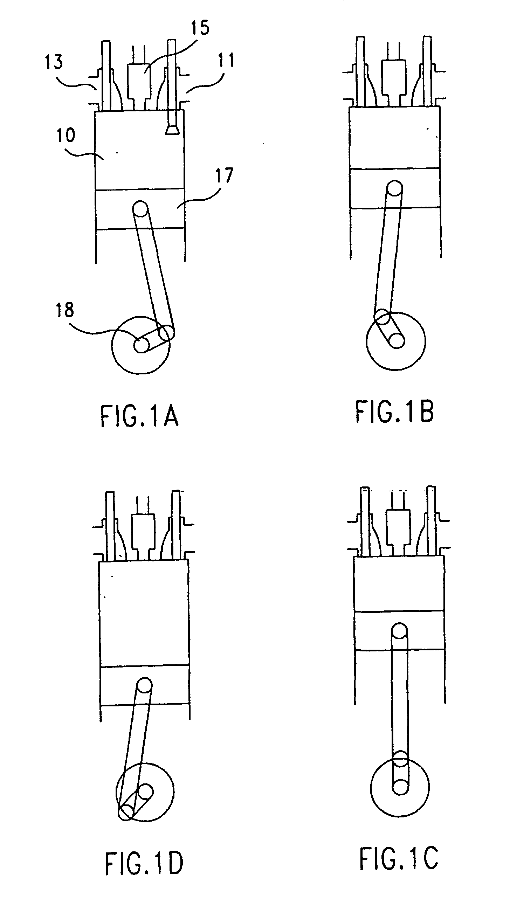

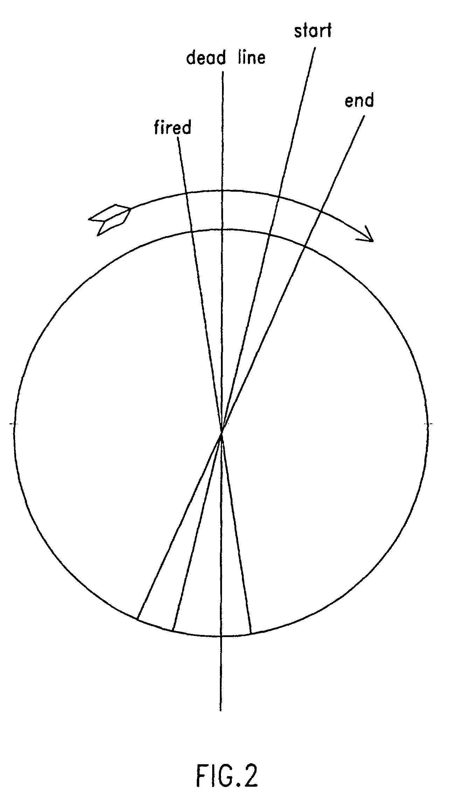

A regular four-stroke internal combustion engine, as shown in Fig. 1A, comprises a cylinder 10 having an intake valve 11, an exhaust valve 13, a fuel injection valve 15, a spark plug, and a piston 17. When the four-stroke internal combustion engine is operated, it passes through four stroke, namely, the intake valve (see Fig. 1A), the compression stroke (see Fig. 1B), the explosion stroke (see Fig. 1C), and the exhaust stroke (see Fig. 1D). The push force obtained from the explosion stroke is transmitted to an output axle bearing 18 for driving things. When at the death line (where the crank shaft and the center of the output axle bearing are aligned), the volume of the cylinder chamber is minimized, i.e., the best compression ratio is obtained, therefore it is the best time to ignite the fuel mixture. When passing over the death line, the piston 17 is gradually lowered, the best compression ratio is disappeared. Therefore, it is not the best igniting time when passed over the death line. Fig. 2 shows the work of a conventional four-stroke internal combustion engine. In order to obtain the optimum compression ratio of the combustion chamber, the engine is ignited before the death line, explosion and expansion stroke are then proceeded in proper order so as to produce a push force for output. Because the torque is zero when at the death line, maximum loss of energy occurs. Therefore, the actual working time starts after passing over death line, and is ended upon the occurrence of the explosion stroke. The engine does not work or negative work after ignition before passing over the death line. Therefore, conventional four-stroke internal combustion engine are not efficient in use, they waste much fuel energy, and produce much pollutant during operation.

In order to eliminate the aforesaid drawbacks, the inventor invented three different structures of internal combustion engine and filed to the Patent Office of the Republic of China under application number 87121955:88100401: 88100740. These internal combustion engine designs effectively eliminate the drawbacks of the conventional internal combustion engines. However, the mechanical precision requirement are critical.

DE 29 32 598 A discloses an internal combustion engine with a piston wherein a J-shaped link is coupled to the piston bearing and is laterally off-set to the line connecting the piston and output shaft. A flange is extending from the link. Bushings are provided which have a uniform thickness.

The present invention has been accomplished under the circumstance in view. The main object of the invention is to overcome the above-described problem of the known art by providing an internal combustion engine which can efficiently transmitting the force generated by the explosion pressure in the combustion chamber to the engine output shaft, thus realizing high efficiency and large output power output power of the internal combustion engine.

It is another object of the present invention to provide a high power output internal combustion engine which saves fuel engine consumption and produces less pollution.

These objects are solved by an internal combustion engine having the features of claim 1. Advantageous further embodiments are subject of the dependent claims.

Thus, an internal combustion engine according to the invention includes a piston reciprocated in the cylinder, a link having a top end mounted with the axle bush and coupled to a bearing at the piston and a bottom eye end at the opposite end thereof mounted with an axle bush, the wall thickness of which is not uniform, a power output a)de- bearing, a crank shaft coupled between the power output axle bearing and the link, the crank shaft having a fixed bearing at one end coupled to the axle bush in the bottom eye end of the link, and at least one flange rod longitudinally mounted on the surface of the link and extended from the bottom of the top eye end to the top of the bottom eye end.

These, and additional objects, advantages, features and benefits of the present invention will become apparent from the following spectification. In the drawings :
Figs from 1A through 1D show the four stroke of the operation of a four-stroke internal combustion engine according to the prior art ;
Fig. 2 explains the work of the four-stroke internal combustion engine according to the prior art ;
Fig. 3 is a sectional front elevational view of the internal combustion engine as a first embodiment of the present invention ;
Fig. 3A is a sectional view taken on line A-A in Fig. 3.
Figs from 4A through 4D show the four stroke of the operation of a four-stroke internal combustion engine according to Fig. 3 ; and
Fig. 5 is sectional front elevational view of the internal combustion engine as a second embodiment of the present invention.

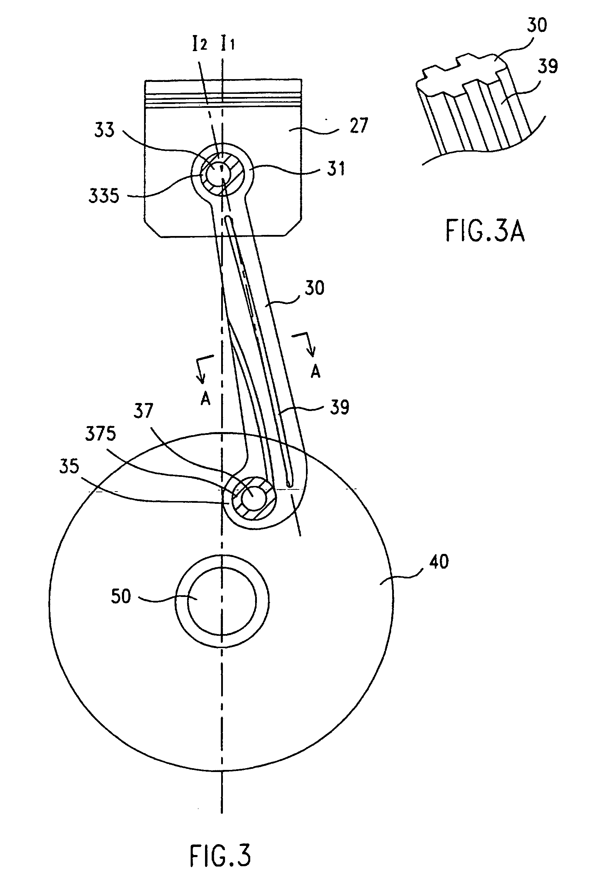

Referring to Fig. 3, an internal combustion engine in accordance with the present invention is generally comprised of a piston 27, a link 30, at least one crank shaft 40, and output axle bearing 50. The link 30 is J-shaped rod member invertedly coupled between the piston 27 and the crank shaft 40, having a top eye end 31 mounted with axle bush 335. A bottom eye end 35 mounted with an axle bush 375 and pivoted to a bearing 37 at each of the at least one crank shaft 40. The at least one crank shaft 40 each has an opposite end connected with a respective power output axle bearing 50.

Because the link 30 is shaped like "J", the rod body of the link 30, the bottom eye end 35 of the link 30, the crank shaft 40, and the power output axle bearing 50 can never be vertically aligned, i.e., the rod body of the link 30, the bottom eye end 35 of the link 30, the crank shaft 40, and the power output axle bearing 50 can not form the so-called "death line" I1. When at the optimum compression ratio (as shown in Fig.3), the rod body of the link 30, the crank shaft and the power output axle bearing 50 form an oblique line I2, therefore no power loss occurs due to non-work or a negative work of the mount of force at the death line upon the explosion stroke. Because the ignition time has nothing to do with the death line under normal operation of the piston 27, the precision of the internal combustion engine is less critical while the internal combustion engine achieves a high power output rate, less fuel energy consumption, and less pollutant production.

Referring to Fig. 3A, according to this alternative form, the axle bush 335 of the link 30, which supports the top eye end 31 of the link 30 at the piston 27, and the axle bush 375, which supports the bottom eye end 35 of the link 30 on the bearing 37 at the crank shaft 40, are eccentric axle bushes, i.e., the axle bush 335 and 375, each have an uneven wall thickness, defining a respective eccentric axial through hole, which revives the bearing 33 or 37. At least one flange rod 39 is longitudinally mounted on the surface of the link 30, and extended from the bottom of the top eye end 31 to the top of the bottom eye end 35. The cross section of the link 30 is a double-cross shaped, therefore, the moment of force will not concentrate on the body of the link 30. The output torque is improved. The link 30 is directly proportional to output torque. Therefore, the design shown in Fig. 3 achieves a relatively higher output torque, and is suitable for a truck or the like.

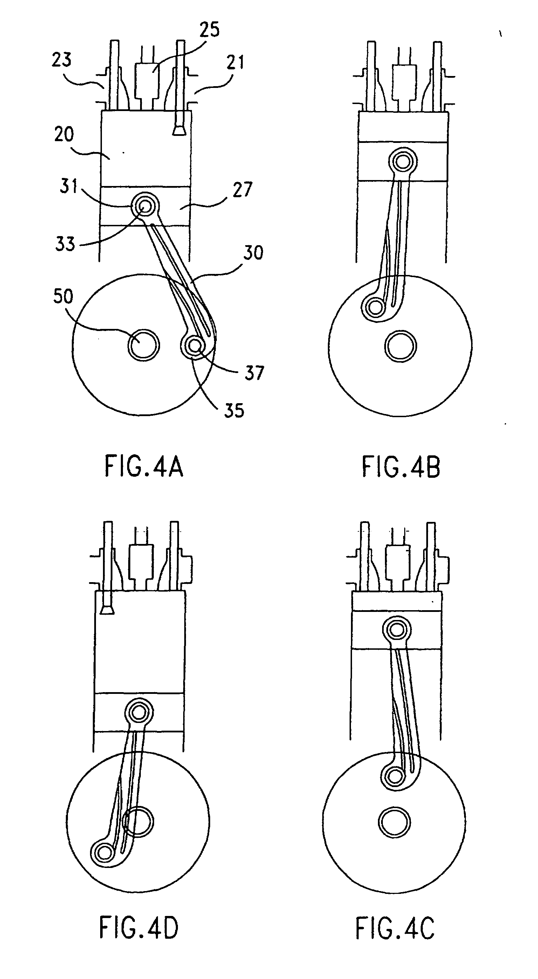

Figs. 4A through 4D illustrate the four stroke of the internal combustion engine in accordance with the present invention. As illustrated, the internal combustion engine is comprised of a cylinder 20, a link 30, a crank shaft 40, and an output axle bearing 50. The cylinder 20 comprises an intake valve 21, an exhaust valve 23, a fuel injection valve 25, a spark plug (not shown), and a piston 27. Fig. 4A shows the operation of the intake stroke. During this stroke, the volume of the cylinder 20 is gradually increased, the relative motion of the link 30 and the crank shaft 40 drives the power output axle bearing 50 to rotate. Fig. 4B shows the operation of the compression stroke. During this stroke, the volume of the cylinder 20 is gradually reduced to the optimum compression ratio. Fig. 4C shows the operation of the explosion stroke. During this stroke, the volume of the cylinder 20 reaches the minimum level, and the rod body of the link 30 is extended from the death line at an angle, therefore no non-work or negative work problem occurs upon explosion, and the power thus obtained from explosion is fully outputted through the power output axle bearing 50. Fig. 4D shows the operation of the exhaust stroke. During this stroke, the piston 27 is moved to the bottom side by expanded gas, and the volume of the cylinder 20 is gradually increased.

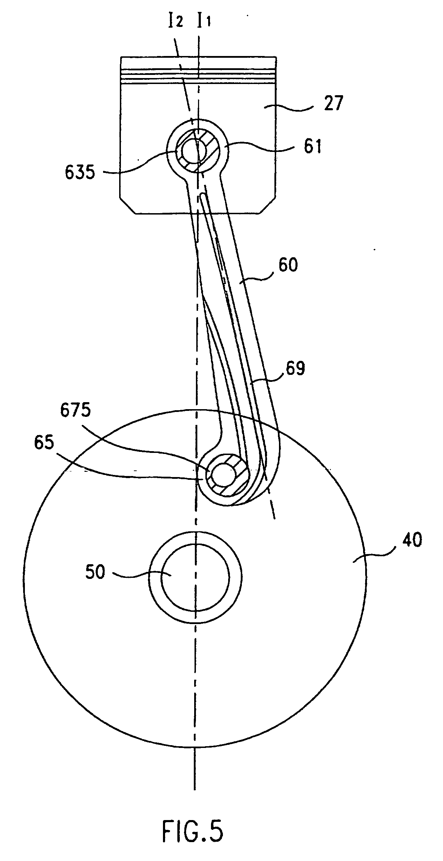

Fig. 5 shows an alternate form of the present invention. According to this alternative form, the axle bush 635 of the link 60, which supports the top eye end 61 of the link 60 at the piston 27, and the axle bush 675, which supports the bottom eye end 65 of the link 60 on the bearing 37 at the crank shaft 40, are eccentric axle bushes, i.e., the axle bush 635 and 675, each have an uneven wall thickness, defining a respective eccentric axial through hole, which revives the bearing 33 or 37. At least one flange rod 69 is longitudinally mounted on the surface of the link 30, and extended from the bottom of the top eye end 61 to the bottom of the bottom eye end 65. Therefore, the output torque is improved.

## Claims

1. An internal combustion engine, comprising :
a cylinder (10) having an intake valve (21), an exhaust valve (23), a fuel injection valve (25), and an ignition plug;
a piston (27) having a bearing (37) and reciprocatingly moving in said cylinder (10);
a link (30) having a J-shaped rod body having a top end and a bottom end, a top eye end (31) formed integral with said top end and coupled to said bearing at said piston (27), a top eye end (35) formed integral with said bottom end, at least one flange rod (39) longitudinally mounted on the surface of said link (30);
at least one crank shaft (40) for transmitting rotary power from said link (30) to a power output axle bearing (50) coupled thereto, said at least one crank shaft (40) each having an fixed bearing formed integral with a first end and coupled to said bottom end of said link (30), and a second end coupled to said power output axle bearing (50); and
an axle bush (335) mounted on said bearing at said piston (27) within said top eye end (31) of said link (30);
**characterised in that**
the wall thickness of said axle bush (335) is not uniform.

2. The internal combustion engine of claim 1, further comprising an axle bush mounted on said fixed bearing at said at least one crank shaft (40) within said bottom eye end (35) of said link (30).

3. The internal combustion engine of claim 2, wherein said axle bush has a uniform wall thickness.

4. The internal combustion engine of claim 2, wherein the wall thickness of said axle bush is not uniform.

5. The internal combustion engine of claim 4, wherein the outer diameter and inner diameter of said axle bush do not have a common center.

6. The internal combustion engine of claim 1, wherein said flange rod (39) longitudinally mounted on the surface of said link is extended from the bottom of said top eye end (31) to the top of said bottom eye end (35).

7. The internal combustion engine of claim 1, wherein said flange rod (39) longitudinally mounted on the surface of said link (30) is extended from the bottom of said top eye end (31) to the bottom of said bottom eye end (35).

8. The internal combustion engine of claim 1, wherein the cross section of said link (30) is a double-cross shaped.

## Patentansprüche

1. Brennkraftmaschine, umfassend:
einen Zylinder (10) mit einem Ansaugventil (21), einem Abgasventil (23), einem Kraftstoffeinspritzventil (25) und einer Zündkerze;
einen Kolben (27), der ein Lager (37) aufweist und sich in dem Zylinder (10) hin- und hergehend bewegt;
eine Pleuelstange (30), aufweisend einen J-förmigen Stangenkörper mit einem oberen Ende und einem unteren Ende, ein integral mit dem oberen Ende gebildetes und mit dem Lager an dem Kolben (27) gekuppeltes oberes Augenende (31), ein integral mit dem unteren Ende gebildetes oberes Augenende (35), wenigestens eine längsgerichtet auf der Oberfläche der Pleuelstange (30) angebrachte Flanschstange (39);
wenigstens eine Kurbelwelle (40) zur Übertragung von Drehkraft von der Pleuelstange (30) zu einem damit gekuppelten Kraftabtriebsachslager (50), wobei die wenigstens eine Kurbelwelle (40) jeweils ein feststehendes Lager aufweist, das integral mit einem ersten Ende gebildet ist und mit dem unteren Ende der Pleuelstange (30) gekuppelt ist, und ein zweites Ende, das mit dem Kraftabtriebsachslager (50) gekuppelt ist; und eine Achsbuchse (335), die auf dem Lager an dem Kolben (27) in dem oberen Augenende (31) der Pleuelstange (30) angebracht ist,
**dadurch gekennzeichnet, daß**
die Wanddicke der Achsbuchse (335) nicht gleichförmig ist.

2. Brennkraftmaschine nach Anspruch 1, weiter umfassend eine Achsbuchse, die an dem feststehenden Lager an der wenigstens einen Kurbelwelle (40) in dem unteren Augenende (35) der Pleuelstange (30) angebracht ist.

3. Brennkraftmaschine nach Anspruch 2, bei der die Achsbuchse eine gleichförmige Wanddicke aufweist.

4. Brennkraftmaschine nach Anspruch 2, bei der die Wanddicke der Achsbuchse nicht gleichförmig ist.

5. Brennkraftmaschine nach Anspruch 4, bei der der Außendurchmesser und der Innendurchmesser der Achsbuchse keinen gemeinsamen Mittelpunkt aufweisen.

6. Brennkraftmaschine nach Anspruch 1, bei der der längsgerichtet auf der Oberfläche der Pleuelstange angebrachte Flanschstab (39) vom Boden des oberen Augenendes (31) bis zur Oberseite des unteren Augenendes (35) verläuft.

7. Brennkraftmaschine nach Anspruch 1, bei der der längsgerichtet auf der Oberfläche der Pleuelstange (30) angebrachte Flanschstab (39) vom Boden des oberen Augenendes (31) bis zum Boden des unteren Augenendes (35) verläuft.

8. Brennkraftmaschine nach Anspruch 1, bei der der Querschnitt der Pleuelstange (30) doppelkreuzförmig ist.

## Revendications

1. Moteur à combustion interne, comprenant :
un cylindre (10) ayant une soupape d'admission (21), une soupape d'échappement (23), une soupape d'injection (25) de carburant et une bougie d'allumage ;
un piston (27) ayant un roulement (37) et se déplaçant en va et vient dans ledit cylindre (10) ;
une bielle (30) ayant un corps en forme de J ayant une extrémité supérieure et une extrémité inférieure, une extrémité à oeillet supérieure (31) formée d'un seul tenant avec ladite extrémité supérieure et accouplée audit roulement au niveau dudit piston (27), une extrémité à oeillet inférieure (35) formée d'un seul tenant avec ladite extrémité inférieure, au moins une tige de rebord (39) montée longitudinalement à la surface de ladite bielle (30) ;
au moins un vilebrequin (40) pour transmettre la puissance rotative de ladite bielle (30) à un palier d'axe de sortie de puissance (50) accouplé à celle-ci, ledit au moins un vilebrequin (40) comportant chacun un palier fixe formé d'un seul tenant avec une première extrémité et accouplé à ladite extrémité inférieure de ladite bielle (30), et une deuxième extrémité accouplée audit palier d'axe de sortie de puissance (50) ; et
une douille d'axe (335) montée sur ledit roulement dans ledit piston (27) à l'intérieur de ladite extrémité à oeillet supérieure (31) de ladite bielle (30) ;
**caractérisé en ce que** l'épaisseur de paroi de ladite douille d'axe (335) n'est pas uniforme.

2. Moteur à combustion interne selon la revendication 1, comprenant en outre une douille d'axe montée sur ledit palier fixe au niveau dudit au moins un vilebrequin (40) à l'intérieur de ladite extrémité à oeillet inférieure (35) de ladite bielle (30).

3. Moteur à combustion interne selon la revendication 2, dans lequel ladite douille d'axe a une épaisseur de paroi uniforme.

4. Moteur à combustion interne selon la revendication 2, dans lequel l'épaisseur de paroi de ladite douille d'axe n'est pas uniforme.

5. Moteur à combustion interne selon la revendication 4, dans lequel le diamètre extérieur et le diamètre intérieur de ladite douille d'axe n'ont pas un centre commun.

6. Moteur à combustion interne selon la revendication 1, dans lequel ladite tige de rebord (39) montée longitudinalement à la surface de ladite bielle s'étend du bas de ladite extrémité à oeillet supérieure (31) au haut de ladite extrémité à oeillet inférieure (35).

7. Moteur à combustion interne selon la revendication 1, dans lequel ladite tige de rebord (39) montée longitudinalement à la surface de ladite bielle (30) s'étend du bas de ladite extrémité à oeillet supérieure (31) au bas de ladite extrémité à oeillet inférieure (35).

8. Moteur à combustion interne selon la revendication 1, dans lequel ladite bielle (30) est de section en forme de double croix.
